Europäisches Patentamt

(19) European Patent Office

Office européen des brevets

(11) Publication number: **0 157 562**

**B1**

(12) **EUROPEAN PATENT SPECIFICATION**

(45) Date of publication of patent specification: **05.04.89**

(21) Application number: **85302030.3**

(22) Date of filing: **25.03.85**

(51) Int. Cl.⁴: **B 01 D 9/02**

(54) **Crystallization apparatus for metal stripping.**

(30) Priority: **30.03.84 JP 62432/84**
**11.05.84 JP 94070/84**

(43) Date of publication of application:
**09.10.85 Bulletin 85/41**

(45) Publication of the grant of the patent:
**05.04.89 Bulletin 89/14**

(84) Designated Contracting States:
**DE FR GB IT SE**

(56) References cited:
**EP-A-0 079 246**
**FR-A-2 153 477**
**US-A-3 615 246**

(73) Proprietor: **KAWASAKI STEEL CORPORATION**
**No. 1-28, 1-Chome Kitahonmachi-Dori**
**Chuo-Ku, Kobe-Shi Hyogo 651 (JP)**

(72) Inventor: **Uchino, Kazuhiro c/o Research**
**Laboratories**
**Kawasaki Steel Corporation 1, Kawasaki-Cho**
**Chiba-City (JP)**
Inventor: **Watanabe, Toshio c/o Research**
**Laboratories**
**Kawasaki Steel Corporation 1, Kawasaki-Cho**
**Chiba-City (JP)**
Inventor: **Hoshino, Minoru c/o Chiba Works**
**Kawasaki Steel Corporation 1, Kawasaki-Cho**
**Chiba-City (JP)**

(74) Representative: **Overbury, Richard Douglas et al**
**HASELTINE LAKE & CO Hazlitt House 28**
**Southampton Buildings Chancery Lane**
**London WC2A 1AT (GB)**

EP 0 157 562 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to crystallization apparatus for metal stripping, wherein an organic solvent containing extracted metal ions is subjected to stripping (back-extraction) by mixing and contacting it with a fluoride stripping solution to thereby separate the metal ions from the organic solvent as metal fluoride or fluorinated metal complex crystals and then the organic solvent is separated from the stripping solution.

Recently solvent extraction has become noted as a method for obtaining high purity metal or metal oxide. In such a technique the purification step is simple and involves little energy consumption. Metals which can be extracted include Mg, Ti, Cr, Mn, Fe, Co, Ni, Cu, Zn, Cd, Nb, Zr, Ta, Mo, W, In and the like.

In the solvent extraction technique the stripping (back-extraction) of the metal ions has hitherto encountered a problem which has been solved by the use of a fluoride stripping solution (an aqueous solution containing one or more of HF, $NH_4HF_2$, $NH_4F$; see Japanese Patent laid open No. 57—42,545, No. 57—73,138, No. 57—73,141 and No. 57—85,943). Further, there has been proposed crystallization apparatus for use in the solvent extraction. For example, the crystallization apparatus described in Japanese Patent laid open No. 58—81,402 (EP—A—079246) is of an inverted frustocone type and is an improvement of a Krystal-Oslo type (or a classifying fluidized bed type) crystalliser for stabilising crystallization conditions, whereby the grain size of the resulting crystal is made very uniform.

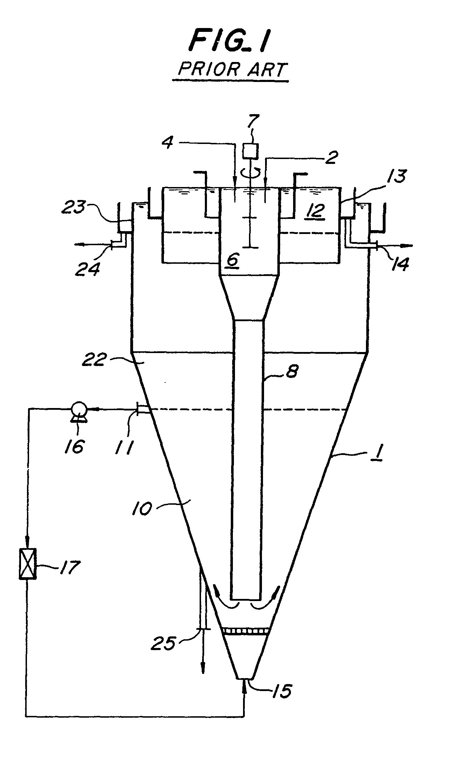

Heretofore, such a crystallization apparatus has been used only in a laboratory scale and has not yet been put to practical use on an industrial scale. Recently an industrial scale crystallization apparatus having a crystal production capacity of 45 tons/month as shown in Fig. 1 of the accompanying drawings has been made and used to perform the crystallization of metal ions. As a result, it has been confirmed that phenomena occur which interfere with the continuous service of the apparatus, such as adhesion of deposited crystals to the inner wall surface of the apparatus, accumulation and agglomeration of deposited crystals in the lower part of the apparatus, incorporation of the organic solvent into the crystal slurry and the like as mentioned in the following Reference Example.

It is, therefore, an object of the invention to solve the problems resulting from the structure of the conventional inverted frustocone type crystallization apparatus and to provide a crystallization apparatus for metal stripping capable of facilitating continuous service on an industrial scale whilst retaining the classification performance of the conventional apparatus.

According to the present invention, there is provided a crystallization apparatus for metal stripping which comprises:

(i) an upper part
(ii) a lower part of inverted frustoconical shape.

(iii) a zone in the upper part of the apparatus for contacting together an organic solvent containing extracted metal ions and an aqueous fluoride stripping solution so that the metal ions precipitate as crystals of metal fluoride or a fluorinated metal complex,

(iv) a cooling zone in the lower part of the apparatus for cooling the stripping solution containing the crystals to effect crystal growth,

(v) a zone in the lower part above the cooling zone for separating the grown crystals

(vi) a heat exchanger for the cooling zone arranged outside the apparatus, and

(vii) a downpipe connecting the mixing zone and the lower part of the apparatus characterised in that the downpipe terminates above said cooling zone and the apparatus includes at least one substantially tangential nozzle located in the lower portion of the lower part for the introduction of stripping solution so as to form a forced circulation zone generating a cyclonic flow in the stripping solution in the lower portion of said cooling zone.

In a preferred embodiment of the invention, the apparatus includes an organic solvent supply pipe having an outlet opening into the mixing zone at a position lower than the outlet of the stripping solution supply pipe but higher than the lower end of the downpipe extending from the mixing zone towards the cooling zone.

For a better understanding of the invention, and to show how the same may be carried into effect, reference will now be made, by way of example, to the accompanying drawings, in which:

Fig. 1 is a schematically sectional view of a conventional crystallization apparatus;

Fig. 2 is a schematically sectional view of an embodiment of the crystallization apparatus for metal stripping according to the present invention.;

Fig. 3 is a sectional view taken along line III—III of Fig. 2;

Figs. 4 and 5 are schematically sectional views of other embodiments of the crystallization apparatus for metal stripping according to the present invention, respectively; and

Fig. 6 and 7 are schematically perspective views of the organic solvent supply pipe of an embodiment of an apparatus according to the present invention, respectively.

Common parts are designated by like reference numerals throughout the different figures of the drawings.

The invention will now be described in detail with reference to the accompanying drawings but is not limited to the illustrated embodiments.

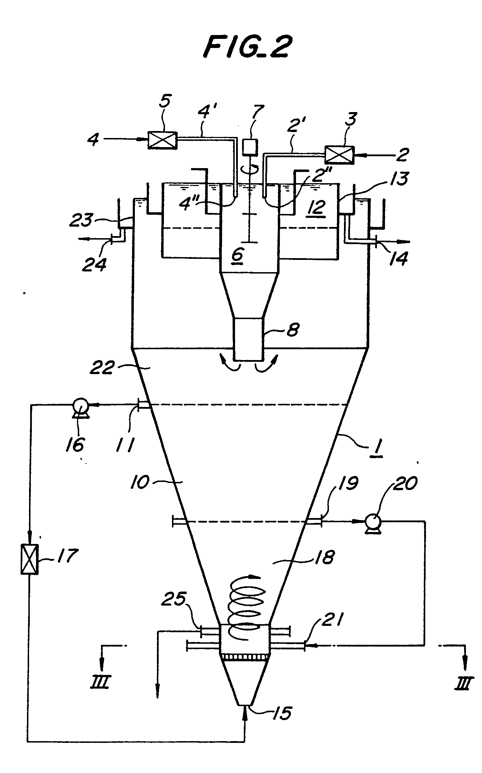

The apparatus includes an upper part and a lower part 1 of inverted frustoconical shape. As shown in Fig. 2, an organic solvent 2 containing extracted metal ions is introduced into a chamber forming a mixing zone 6 in the upper part of the apparatus through a supply pipe 2′ provided with a temperature regulator 3, while an aqueous fluoride stripping solution 4 containing $NH_4HF_2$ or the like is also introduced into the mixing zone 6 through a supply pipe 4' provided with a heating device 5. In the mixing zone 6, the organic solvent and the stripping solution are mixed by means of an agitator 7, whereby the metal ions contained in the organic phase 2 are precipitated as crystals of metal fluoride or fluorinated metal ammonium salt in the aqueous phase 4.

The aqueous phase 4 (having its specific gravity increased by the stripping of the metal ions) descends a downpipe 8 extending downwards from the mixing zone 6, during which the organic solvent is separated from the aqueous phase and rises upward into the mixing zone 6 and the crystals of metal fluoride or fluorinated metal ammonium salt, having a relatively small solubility, are precipitated from the stripping solution.

According to the present invention, the lower end of the downpipe 8 does not extend to the vicinity of the lower end portion of the lower part 1 as is conventionally the case (see Fig. 1) but terminates at a position higher than outlet 11 for cooled stripping solution located at the upper limit of a stripping solution cooling zone 10 mentioned later. This is to promote the separation and rise of the organic solvent from the stripping solution and the descent of the deposited crystals through the downpipe 8.

The organic solvent overflows from the mixing zone 6 into a settling zone 12 and is discharged from an outlet 14 for the organic solvent through an overflow wall 13. On the other hand, the stripping solution and the crystals are introduced from the downpipe 8 into the stripping solution cooling zone 10 (or the crystal growth zone). The cooling zone 10 is connected to a pump 16 and a heat exchanger 17 through the outlet 11 and to inlet 15 for the cooled stripping solution, whereby the stripping solution, fed in the warmed state from the mixing zone 6, is cooled to accelerate the crystal growth and also classify a part of the deposited crystals.

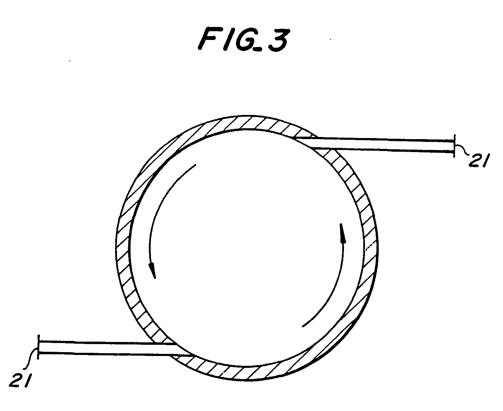

Further, a forced circulation zone 18 is disposed in the lowest portion of the cooling zone 10 and is connected to an outlet 19 for the stripping solution, a pump 20, and at least one blow-off nozzle 21 for circulating the stripping solution. In the illustrated embodiment, two blow-off nozzles 21 are arranged in the same plane in a substantially tangential direction with respect to the forced circulation zone 18 as shown in Fig. 3, through which the cooled stripping solution is blown into the zone 18 to generate a cyclonic flow of the stripping solution. Thus, the temperature and the concentration and composition of the stripping solution are held uniformly while giving fluidity to the crystal slurry, whereby the adhesion of crystals to the inner wall of the apparatus and the accumulation and agglomeration of crystals in the lower part of the apparatus can be prevented.

After the stripping solution 4 is introduced into the cooling zone 10 through the downpipe 8, it passes upwards through a crystal separating zone 22 and finally is discharged from an outlet 24 for the stripping solution through an overflow wall 23. On the other hand, the deposited crystals are conveniently discharged as a slurry from a crystal outlet pipe 25 and then subjected to a liquid-solid separation.

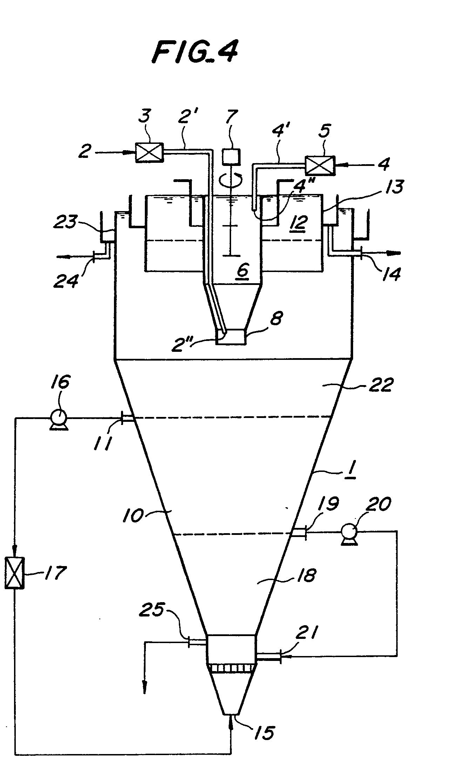

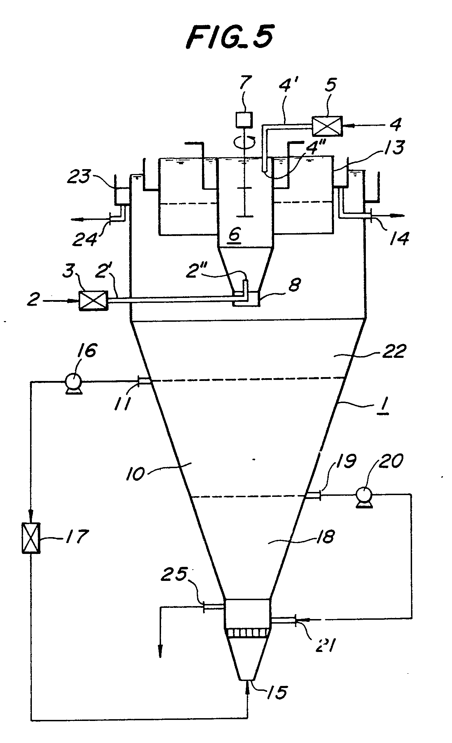

In Figs. 4 and 5 are shown preferable modified embodiments of the crystallization apparatus for metal stripping of Fig. 2, respectively.

In the apparatus of Fig. 2, the outlet end 2'' of the supply pipe 2' for organic solvent is located in the upper portion of the mixing zone 6 at a level substantially equal to the outlet end 4'' of the supply pipe 4' for stripping solution, so that the residence time of the organic solvent 4 inside the mixing zone 6 is short and the deposition of crystal grains occurs in the upper portion of the mixing zone 6. As a result, fine particles of the deposited crystal may be entrapped in the organic solvent and then flow into the settling zone 12 to produce the phenomena of adhesion and accumulation.

In order to solve the above problem, it is preferable that the outlet end 2'' of the organic solvent supply pipe 2' is disposed in the mixing zone 6 at a position lower than the outlet end 4'' of the stripping solution supply pipe 4' but higher than the lower end of the downpipe 8 as shown in Figs. 4 and 5. Thus, the residence time of the organic solvent inside the mixing zone 6 becomes longer as compared with the case of using the apparatus of Fig. 2 and also the deposition of crystals is produced in a relatively lower portion of the mixing zone 6. Since the organic solvent leaving from the outlet end 2'' flows upwards and the stripping solution leaving from the outlet end 4'' and the deposited crystals flow downwards, the organic solvent countercurrently contacts the stripping solution and the deposited crystals in the mixing zone 6. As a result, the fine particles in the deposited crystals which are entrapped in the organic solvent are removed into the descending stripping solution, so that the amount of fine crystal particles entrapped in the organic solvent is considerably reduced and the adhesion and accumulation of such particles in the settling zone 12 can be prevented as shown in the following example.

As mentioned above, the prevention of the adhesion and accumulation of the fine crystal particles can be achieved by disposing the outlet end 2'' of the organic solvent supply pipe 2' at a position lower than the outlet end 4'' of the stripping solution supply pipe 4' but higher than the lower end of the downpipe 8 in the mixing zone 6. Particularly, such an effect is most conspicuous in an apparatus wherein the outlet end 2'' of the organic solvent supply pipe 2' is disposed at a position just above the lower end of the downpipe 8.

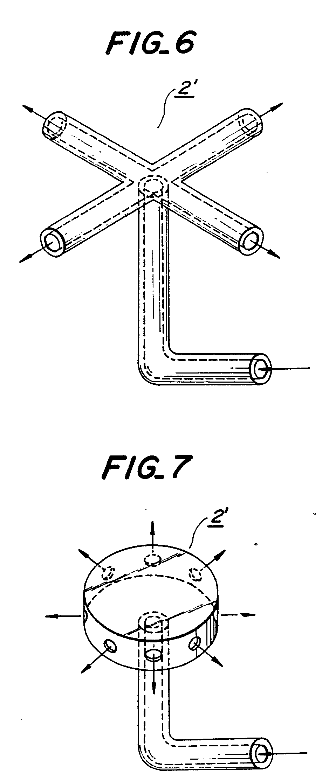

Moreover, the form of the organic solvent supply pipe 2' may be properly modified within the scope of the invention. Although the object of the invention can be achieved when the organic solvent supply pipe 2' is of a single nozzle form as shown in Figs. 2, 4 and 5, it can be achieved more effectively by enlarging the effective opening area of the supply pipe 2' so as to enhance the contact efficiency between the rising flow of the organic solvent and the descending flow of the stripping solution. The preferred modifications of the organic solvent supply pipe 2' is shown in Figs. 6 and 7.

According to the present invention, the downpipe extending downwards from the mixing zone is terminated above the stripping solution cooling zone as compared with the conventional apparatus wherein the lower end of the downpipe is located near the lower end portion of the apparatus, and at the same time a forced circulation zone is arranged in the lowest portion of the stripping solution cooling zone, whereby the adhesion of the separated crystals to the inner wall of the apparatus and the accumulation and agglomeration of the crystals in the lower part of the apparatus can be prevented. Further, the outlet end of the organic solvent supply pipe is preferably disposed in the mixing zone at a position lower than the outlet end of the stripping solution supply pipe but higher than the lower end of the downpipe, whereby the entrapment of fine crystal particles in the organic solvent can be suppressed to prevent the adhesion and accumulation of the fine crystal particles in the settling zone for the organic solvent. In this way, the continuous service of the apparatus according to the invention can easily be accomplished.

The following Examples illustrate the invention and are not intended as limitations thereof.

Reference Example

In the conventional apparatus shown in Fig. 1, an organic solvent (21°C) consisting of 30 V/V% of di(2-ethylhexyl) phosphoric acid (D2EHPA) and 70 V/V% of n-paraffin and containing 17.6 g/l of extracted $Fe^{3+}$ was charged into the mixing zone 6 at a rate of 2 m³/hr, while an aqueous solution of 125 g/l of $NH_4HF_2$ (46°C) as stripping solution was charged into the zone 6 at a rate of 3.5 m³/hr, whereby crystals of $(NH_4)_3FeF_6$ were deposited. However, the fine particles of the resulting crystals became adhered to the inner wall of the apparatus and the inner and outer walls of the downpipe in the lower part of the apparatus and further accumulation and agglomeration of the crystals occurred in the lower part of the apparatus, and consequently it was difficult to continue the operation after 3 days from commencement. Furthermore, since the lower end of the downpipe 8 extended to the vicinity of the bottom of the apparatus, droplets of organic solvent leaving from the downpipe rose upwards in the stripping solution cooling zone. Some of these droplets were sucked from the outlet 11 for the stripping solution and became incorporated in the crystal slurry. By analysis, the content of P in the crystals was 2—3%.

Example 1

In the crystallization apparatus for metal stripping according to the invention as shown in Fig. 2, an organic solvent (23°C) having the same composition as in the Reference Example and containing 18.7 g/l of extracted $Fe^{3+}$ was charged at a rate of 2 m³/hr, while a stripping solution of 125 g/l of $NH_4HF_2$ (45°C) was charged at a rate of 3.5 m³/hr, whereby crystals of $(NH_4)_3FeF_6$ were deposited in the mixing zone 6. In this case, the adhesion of the crystals to the inner wall of the apparatus and the accumulation and agglomeration of the crystals at the lower portion of the apparatus were not substantially observed even at 24 days from the beginning of the operation. Furthermore, since the lower end of the downpipe 8 was located above the upper limit of the stripping solution cooling zone 10, the incorporation of the organic solvent into the crystal slurry was less. By analysis, the content of P in the crystals was 0.31 ~ 0.60%.

Example 2

In the crystallization apparatus for metal stripping according to the invention as shown in Fig. 4, an organic solvent consisting of 30 V/V% of di-(2-ethylhexyl) phosphoric acid (D2EHPA) and 70 V/V% of n-paraffin and containing 16.3 ~ 18.4 g/l of extracted $Fe^{3+}$ at a temperature of 21—23°C was charged into the mixing zone 6 at a rate of 2 m³/hr. In the mixing zone 6, the outlet 2'' of the organic solvent supply pipe 2' was located just above the lower end of the downpipe 8 and the outlet 4'' of the stripping solution supply pipe 4' was located 185 cm above the outlet 2''. A stripping solution consisting of 118 ~ 130 g/l of $NH_4HF_2$ and 4~9 g/l of HF at a temperature of 45 ~ 47°C was charged at a rate of 3.5 m³/hr during continuous operation of the apparatus. As a result, the adhesion of the crystals to the settling zone 12 was not substantially observed even at 30 days from the beginning of the operation. Thus continuous operation of the apparatus was performed without trouble.

Claims

1. A crystallization apparatus for metal stripping which comprises:
(i) an upper part
(ii) a lower part (1) of inverted frustoconical shape,
(iii) a mixing zone (6) in the upper part of the apparatus for contacting together an organic solvent (2) containing extracted metal ions and an aqueous fluoride stripping solution (4) so that the metal ions precipitate as crystals of metal fluoride or a fluorinated metal complex,
(iv) a cooling zone (10) in the lower part (1) of the apparatus for cooling the stripping solution containing the crystals to effect crystal growth, (v) a zone (22) in the lower part above the cooling zone for separating the grown crystals,
(vi) a heat exchanger (17) for the cooling zone arranged outside the apparatus, and
(vii) a downpipe (8) connecting the mixing zone (6) and the lower part (1) of the apparatus characterised in that the downpipe (8) terminates above said cooling zone (10) and the apparatus includes at least one substantially tangential nozzle (21) located in the lower portion of the lower part (1) for the introduction of stripping solution so as to form a forced circulation zone (18) generating a cyclonic flow in the stripping solution in the lower portion of said cooling zone (10).

2. An apparatus according to claim 1 which includes an organic solvent supply pipe (2') and a stripping solution supply pipe (4') for introducing the organic solvent and the stripping solution respectively into the mixing zone (6) wherein the outlet (2") of the organic solvent supply pipe (2') is located in said mixing zone at a position lower than the outlet (4") of the stripping solution supply pipe (4') but higher than the lower end of said downpipe (8).

**Patentansprüche**

1. Kristallisationvorrichtung zur Trennung von Metallen, bestehend aus:
(I) einem Oberteil,
(II) einem Unterteil (1) mit umgedreht kegelstumpfförmiger Form,
(III) einer Mischzone (6) im Oberteil der Vorrichtung zur Kontaktierung einer organischen Lösung (2), die freie Metall-Ionen enthält und einer wässrigen, Fluorid abtrennenden Lösung (4), so daß die Metall-Ionen sich als Metall-Fluorid-Kristalle oder als ein fluorhaltiger Metallkomplex niederschlagen,
(IV) einer Kühlzone (10) im Unterteil (1) der Vorrichtung zur Kühlung der die Kristalle enthaltenden Trennlösung um ein Kristallwachstum zu erzielen,
(V) einer Zone (22) im Unterteil oberhalb der Kühlzone um die gewachsenen Kristalle abzuscheiden,
(VI) einem außerhalb der Vorrichtung angeordneten Wärmetauscher (17) für die Kühlzone und
(VII) einem Abflußrohr (8), welches die Mischzone (6) und den Unterteil (1) der Vorrichtung verbindet, dadurch gekennzeichnet, daß das Abflußrohr (8) über der genannten Kühlzone (10) endet und daß die Vorrichtung wenigstens eine im wesentlichen tangential verlaufende Düse (21) enthält, die sich im unteren Bereich des Unterteils (1) befindet und zu einem derartigen Einleiten der Trennlösung dient, daß eine starke Zirkulationszone (18) entsteht, die im unteren Bereich der genannten Kühlzone (10) eine zyklonartige Strömung der Trennlösung bewirkt.

2. Vorrichtung nach Anspruch 1, die ein Versorgungsrohr (2') für die organische Lösung und ein Versorgungsrohr (4') für die Trennlösung zum Einleiten der organischen Lösung bzw. der Trennlösung in die Mischzone (6) enthält, wobei der Ausgang (2") des der organischen Lösung zugeordneten Versorgungsrohrs (2') sich in der genannten Mischzone an einer Stelle befindet, die tiefer als der Ausgang (4") des Versorgungsrohrs (4') für die Trennlösung, aber höher als das untere Ende des genannten Abflußrohrs (8) vorgesehen ist.

**Revendications**

1. Appareil de cristallisation pour la séparation des métaux, qui comprend:
i) une partie supérieure,
ii) une partie inférieure (1) ayant une forme tronconique inversée,
iii) une zone de mélange (6) dans la partie supérieure de l'appareil, pour mettre en contact l'un avec l'autre un solvant organique (2) contenant des ions métalliques extraits et une solution aqueuse de séparation (4) à base de fluorures, de façon que les ions métalliques précipitent sous forme de cristaux de fluorure métallique ou d'un complexe métal fluoré,
iv) une zone de refroidissement (10) dans la partie inférieure (1) de l'appareil, pour refroidir la solution de séparation contenant les cristaux et ainsi provoquer la croissance cristalline,
v) une zone (22) dans la partie inférieure, située au-dessus de la zone de refroidissement et destinée à séparer les cristaux après leur croissance,
vi) un échangeur de chaleur (17) pour la zone de refroidissement, disposé à l'extérieur de l'appareil, et
vii) un tuyau de descente (8) reliant la zone de mélange (6) et la partie inférieure (1) de l'appareil, caractérisé en ce que le tuyau de descente (8) se termine au-dessus de ladite zone de refroidissement (10) et l'appareil comprend au moins une buse pratiquement tangentielle (21) située dans la portion inférieure de la partie inférieure (1) et destinée à introduire la solution de séparation de façon à former une zone à circulation forcée (18) créant un écoulement de type cyclone dans la solution de séparation dans la portion inférieure de ladite zone de refroidissement (10).

2. Appareil selon la revendication 1, qui comprend un tuyau d'alimentation (2') du solvant organique et un tuyau d'alimentation (4') de la solution de séparation, pour introduire respectivement le solvant organique et la solution de séparation dans la zone de mélange (6), où l'orifice de sortie (2") du tuyau d'alimentation (2') du solvant organique est située dans ladite zone de mélange en un point situé plus bas que l'orifice de sortie (4") du tuyau d'alimentation (4') de la solution de séparation, mais plus haut que l'extrémité inférieure dudit tuyau de descente (8).

# FIG. 1

## PRIOR ART

# FIG. 2

# FIG. 3

21

21

# FIG.4

FIG. 5

EP 0 157 562 B1

5

## FIG_6

## FIG_7